# EUROPÄISCHE PATENTSCHRIFT

(11) **EP 3 310 529 B1**
(45) Veröffentlichungstag und Bekanntmachung des Hinweises auf die Patenterteilung: **28.04.2021**
(21) Anmeldenummer: 16731041.6
(22) Anmeldetag: 06.06.2016
(51) Int. Cl.: B23Q 1/54, B29C 65/08, B23Q 3/06, B23K 20/10, B23K 37/04

(54) **WERKSTÜCKAUFNAHME**
WORKPIECE HOLDING DEVICE
PORTE-PIÈCE

(30) Priorität: 16.06.2015 EP 15172248
(43) Veröffentlichungstag der Anmeldung: 25.04.2018
(73) Patentinhaber: Pentracor GmbH, 16761 Hennigsdorf (DE)
(72) Erfinder: ENDRULLAT, Thomas, 15723 Schulzendorf (DE)
(74) Vertreter: dompatent von Kreisler Selting Werner - Partnerschaft von Patent- und Rechtsanwälten mbB
(86) Internationale Anmeldenummer: PCT/EP2016/062814
(87) Internationale Veröffentlichungsnummer: WO 2016/202624

(56) Entgegenhaltungen:
- EP-A1- 2 818 304
- EP-A2- 0 995 541
- WO-A1-2008/136683
- DE-A1- 2 217 318
- DE-U- 7 213 408
- JP-U- S4 819 669
- US-A- 3 487 192

## Beschreibung

Die Erfindung betrifft eine Werkstückaufnahme. Die Werkstückaufnahme ist insbesondere zur lagegenauen Aufnahme von Werkstücken für die Bearbeitung, wie insbesondere in Pressen oder Stanzen geeignet. Besonders geeignet ist die erfindungsgemäße Werkstückaufnahme für eine Ultraschall-Schweißvorrichtung.

Mit Hilfe von Ultraschall-Schweißvorrichtungen können Kunststoffteile verbunden werden. Um insbesondere ein dichtes Verschweißen zweier Kunststoffbauteile mit Hilfe des Ultraschallschweißens zu ermöglichen, ist es erforderlich, dass die beiden zu verschweißenden Bauteile hochpräzise planparallel zueinander ausgerichtet sind. Dies ist mit Hilfe von bekannten Vorrichtungen zwar möglich, jedoch äußert aufwendig. Insbesondere muss jedes einzelne Bauteil gesondert in der Vorrichtung ausgerichtet werden.

US 3487192 beschreibt eine selbstausrichtende Werkstückaufnahme zum Schweißen gemäß den Merkmalen des Oberbegriffs des Patentanspruchs 1.

Die exakte Ausrichtung von Werkstücken ist auch in anderen Bearbeitungsvorrichtungen gewünscht. Insbesondere ist dies auch beim Pressen oder Stanzen vorteilhaft.

Aufgabe der Erfindung ist es eine Werkstückaufnahme zu schaffen, mit der auf einfache Weise ein exaktes Ausrichten von beispielsweise zu verschweißenden, zu stanzenden oder zu pressenden Teile zueinander möglich ist.

Die Lösung der Aufgabe erfolgt erfindungsgemäß durch die Merkmale des Anspruchs 1.

Die erfindungsgemäße Werkstückaufnahme ist zur exakten Aufnahme und Ausrichtung von Werkstücken, beispielsweise zum Verschweißen, zum Stanzen oder zum Pressen von Teilen geeignet.

Nachfolgend wird die erfindungsgemäße Werkstückaufnahme zur Verdeutlichung und Verbindung mit einer Ultraschall-Schweißvorrichtung näher beschrieben.

Die erfindungsgemäße Werkstückaufnahme weist ein Aufnahmeelement zur Aufnahme des Werkstücks auf. Auf diesem Aufnahmeelement kann beispielsweise eines der beiden zu verschweißenden Bauteile oder bereits beide zu verschweißenden Bauteile angeordnet werden. Die insbesondere beiden Bauteile können durch mit dem Aufnahmeelement verbundene Halte- und/oder Klemmevorrichtungen fixiert werden. Das Aufnahmeelement ist zur Ausrichtung des mindestens einen zu verschweißenden Werkstücks von einem Basiselement aufgenommen bzw. getragen. Das Basiselement selbst ist vorzugsweise ortsfest. Zwischen dem Basiselement und dem Aufnahmeelement ist eine Lagereinrichtung angeordnet, um ein Bewegen des Aufnahmeelements relativ zum Basiselement zu ermöglichen. Hierdurch ist ein Ausrichten des Aufnahmeelements und somit des von dem Aufnahmeelement getragenen mindestens einen Werkstücks möglich. Erfindungsgemäß ist das Aufnahmeelement mit einer Lagerschale verbunden, wobei die Lagerschale und das Aufnahmeelement auch einstückig ausgebildet sein können. Insbesondere bildet eine Außenseite des Aufnahmeelements die Lagerschale. Entsprechend ist auch das Basiselement mit einer Lagerschale verbunden, wobei wiederum das Basiselement und die Lagerschale einstückig ausgebildet sein können und es besonders bevorzugt ist, dass eine Außenseite des Basiselements die Lagerschale bildet. Erfindungsgemäß weisen die beiden Lagerschalen eine sphärische Oberfläche auf. Hierdurch ist es mit Hilfe der erfindungsgemäßen Werkstückaufnahme möglich, das mindestens eine von dem Aufnahmeelement getragene Werkstück mit Hilfe einer einzigen Werkstückaufnahme im Raum auszurichten. Es ist im Unterscheid zu üblichen Werkstückaufnahmen nicht erforderlich eine Ausrichtung über zwei Achsen vorzunehmen. Dies ist erheblich aufwendiger.

Vorzugsweise sind die beiden sphärischen Oberflächen der Lagerschalen konzentrisch zueinander angeordnet. Insbesondere weisen die beiden Lagerschalen bzw. die beiden sphärischen Oberflächen der Lagerschalen denselben Mittelpunkt auf. Es ist besonders bevorzugt, das mindestens eine zu verschweißende Werkstück derart an dem Aufnahmeelement anzuordnen, dass eine Schweißebene durch den gemeinsamen Mittelpunkt verläuft. Erfolgt beispielsweise ein Verschweißen eines hohlzylindrischen Körpers mit einem Deckel so ist es bevorzugt, dass die in diesem Fall insbesondre kreisringförmig ausgebildete Schweißfläche die Schweißebene ausbildet und diese durch den gemeinsamen Mittelpunkt der sphärischen Oberflächen verläuft. Besonders bevorzugt ist es, dass das zu verschweißende Werkstück derart angeordnet ist, dass der Mittelpunkt der kreisringförmigen Schweißfläche mit dem gemeinsamen Mittelpunkt der sphärischen Oberflächen zusammenfällt. Es ist nun möglich das zweite Werkstück, wie den Deckel, auf den zylindrischen Körper anzuordnen. Erfolgt nun beispielsweise ein Absenken der Ultraschall-Schweißvorrichtung auf den Deckel, so erfolgt ein automatisches Ausrichten der beiden zu verschweißenden Bauteile.

Erfindungsgemäß sind zwischen den beiden Lagerschalen Kugeln angeordnet.

Desweitern ist es bevorzugt, dass die Kugeln in einem definierten Abstand zueinander angeordnet sind. Vorzugsweise ist ein Lagerkäfig vorsehen, der die Kugeln insbesondere auf einem gleichmäßigen Abstand zueinander hält. Auf Grund der bevorzugten äquidistanten Anordnung der Kugeln ist eine gleichmäßige Bewegung des Aufnahmeelements relativ zum Basiselement sichergestellt.

Wenngleich eine Ausrichtung der Schweißebene automatisch durch Absenken oder Andrücken der Schweißvorrichtung erfolgen kann, ist zusätzlich ein Fixierelement zum Fixieren des Aufnahmeelements gegenüber dem Basiselement vorgesehen. Dies kann durch ein Klemmen oder dergleichen erfolgen. Durch das Fixierelement kann vermieden werden, dass ein Verstellen während des Schweißvorgangs erfolgt. Ebenso wäre es mit Hilfe des Fixierelements möglich eine bewusste Schrägstellung eines Werkstücks vorzunehme. Das Fixierelement kann beispielsweise Elektromagnete aufweisen, die sodann zum Fixieren bestromt werden. Dies hat den Vorteil, dass kein mechanisches Fixierelement vorgesehen sein muss. Beim Vorsehen eines mechanischen Fixierelements könnte ein ungewolltes Verstellen erfolgen. In einfacher Ausführungsform kann das Fixierelement jedoch ein Spannelement aufweisen, das insbesondere über ein Hebelelement verspannt werden kann.

In besonders bevorzugter Weiterbildung der Erfindung ist ein Justageelement vorgesehen. Das Justageelement dient zur Justage des Werkstücks, derart, dass die Schweißebene durch den Mittelpunkt der beiden sphärischen Oberflächen verläuft. Mit Hilfe des Justageelements ist es somit möglich unterschiedliche Werkstücke mit derselben Werkstückaufnahme exakt zu justieren. Hierbei ist es möglich, dass in Abhängigkeit des zu verschweißenden Werkstücks jeweils ein werkstückspezifisches Justageelement vorgesehen ist. Das Justageelement entspricht hierbei einer Art Zusatzaufnahme. Diese wird auf dem Aufnahmeelement angeordnet und dient sodann zur Aufnahme des Werkstücks. Alternativ ist es auch möglich ein Justageelement vorzusehen, das beispielsweise ein horizontales Verschieben des Werkstücks ermöglicht.

Ferner betrifft die Erfindung eine Schweißeinrichtung mit einer Ultraschall-Schweißvorrichtung sowie einer Werkstückaufnahme, wobei es sich bei der Werkstückaufnahme um die vorstehend beschriebene insbesondere vorteilhaft weitergebildete Werkstückaufnahme handelt. Desweiteren ist eine Schließvorrichtung zum Bewegen der Schweißvorrichtung relativ zu einem in der Werkstückaufnahme angeordneten Werkstück vorgesehen. Hierbei kann insbesondere eine selbstständige Ausrichtung erfolgen, sodass die zu verschweißenden Oberflächen parallel zueinander sind.

Die vorstehend, insbesondere auch anhand bevorzugter Weiterbildungen beschriebene Werkstückaufnahme ist nicht nur für Ultraschall-Schweißvorrichtungen, sondern auch für andere Vorrichtungen zur Bearbeitung von Werkstücken geeignet. Insbesondere ist die Werkstückaufnahme für Press- und/oder Stanzvorrichtungen geeignet.

Nachfolgend wird die Erfindung anhand einer bevorzugten Ausführungsform unter Bezugnahme auf die anliegende Zeichnung näher erläutern.

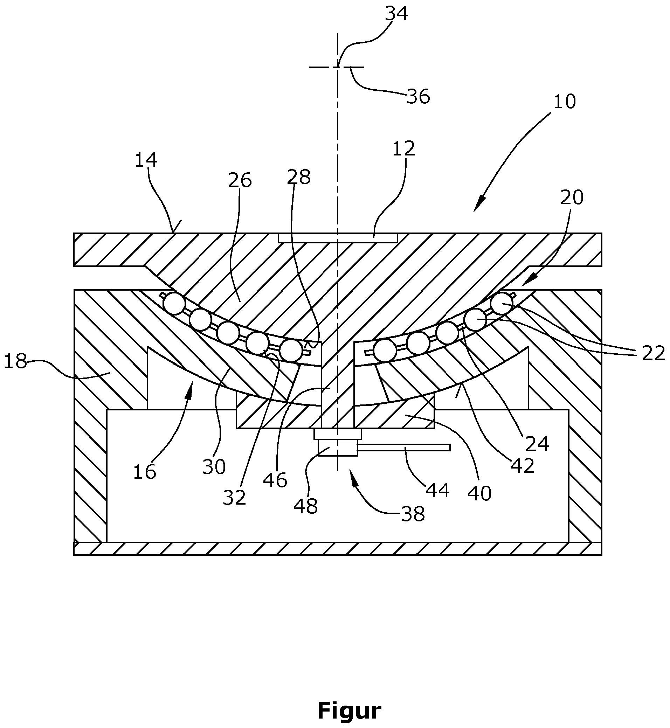

Die Figur zeigt eine schematische Schnittansicht einer Werkstückaufnahme, die insbesondere für eine Schweißeinrichtung aber auch für andere Vorrichtungen zur Bearbeitung von Werkstücken geeignet ist.

Die in der Figur dargestellte Werkstückaufnahme weist ein Aufnahmeelement 10 zur Aufnahme eines Werkstücks auf. Hierbei kann das Werkstück auf dem Aufnahmeelement 10 beispielsweise in einer insbesondere zur Justage dienenden Vertiefung 12 angeordnet werden. Auch ist es möglich beispielsweise an einer Oberseite 14 des Aufnahmeelements 10 Klemm- und/oder Haltevorrichtungen vorzusehen. Das Aufnahmeelement 10 ist gegenüber einem Basiselement 16 beweglich. Das Basiselement 16 ist im dargestellten Ausführungsbeispiel von einem Rahmenelement 18 getragen und ortsfest. Um ein Bewegen zwischen dem Aufnahmeelement und dem Basiselement zu ermöglichen, ist eine Lagereinrichtung 20 vorgesehen. Die Lagereinrichtung 20 weist im dargestellten Ausführungsbeispiel eine Vielzahl von Kugeln 22 auf. Die Kugeln 22 sind gleichmäßig verteilt bzw. äquidistant zwischen dem Aufnahmeelement 10 und dem Basiselement 16 angeordnet. Hierzu ist im dargestellten Ausführungsbeispiel ein Lagerkäfig 24 vorgesehen. Zur Ausbildung der Lagereinrichtung ist eine in der Figur untere Seite des Aufnahmeelements 10 als Lagerschale 26 ausgebildet, indem die Unterseite des Aufnahmeelements 10 als sphärische Oberfläche 28 ausgebildet ist. Der der Lagerschale 26 gegenüberliegende Teil des Basiselements 16 ist als Lagerschale 30 ausgebildet. Eine in Richtung der Oberfläche 28 weisende Oberfläche 32 ist ebenfalls als sphärische Oberfläche ausgebildet. Die beiden sphärischen Oberflächen 28, 32, die die Oberflächen der Lagerschalen ausbilden, weisen einen konstanten Abstand zueinander auf. Insbesondere weisen die beiden sphärischen Oberflächen 28, 32 denselben Mittelpunkt 34 auf.

Zum Verschweißen von zwei Werkstücken können diese auf der Oberseite 14 des Aufnahmeelements angeordnet und beispielsweise fixiert oder gehalten werden. Die Anordnung der Werkstücke erfolgt jedoch vorzugsweise derart, dass die Schweißebene der Werkstücke in einer Ebene 36 liegt, die durch den gemeinsamen Mittelpunkt 34 der beiden sphärischen Oberflächen 28, 32 führt. Hierdurch ist es insbesondere möglich eine Schweißvorrichtung in der Figur von oben auf die zu verschweißenden Werkstücke abzusenken, sodass hierdurch insbesondere automatisch bzw. selbsttätig eine planparallele Ausrichtung der zu verschweißenden Bauteile in der Schweißebene 36 erfolgt.

Desweiteren ist es möglich, das Aufnahmeelement 10 und somit auch das auf dem Aufnahmeelement 10 angeordnete Werkstück gegenüber dem Basiselement 18 zu fixieren. Dies könnte beispielsweise durch Elektromagnete aufweisende Fixierelemente oder dergleichen erfolgen. Es ist, wie im dargestellten Ausführungsbeispiel dargestellt, möglich ein Halteelement 38 vorzusehen. Dies weist im dargestellten Ausführungsbeispiel ein Anlageelement 40 auf, das an einer Unterseite 42 des Basiselements 16 anliegt. Über einen Hebel 44, der mit einer auf einer Gewindestange 46 angeordneten Mutter 48 verbunden ist, kann ein klemmendes Fixieren des Aufnahmeelements 10 gegenüber dem Basiselement 16 erfolgen.

## Patentansprüche

1. Werkstückaufnahme, mit
einem Aufnahmeelement (10) zur Aufnahme des Werkstücks,
einem das Aufnahmeelement (10) beweglich aufnehmenden Basiselement (16),
einer eine Bewegung zwischen dem Aufnahmeelement (10) und dem Basiselement (16) ermöglichenden Lagereinrichtung (20),
einer mit dem Aufnahmeelement (10) verbundenen Lagerschale (26) und
einer mit dem Basiselement (16) verbundenen Lagerschale (30), wobei
beide Lagerschalen (26, 30) eine sphärische Oberfläche (28, 32) aufweisen,
wobei
zwischen den beiden Lagerschalen (26, 30) Kugeln (22) angeordnet sind,
**gekennzeichnet durch** ein Fixierelement (38) zum Fixieren des Aufnahmeelements (10) gegenüber dem Basiselement (16) in verschiedenen Lagen

2. Werkstückaufnahme nach Anspruch 1, **dadurch gekennzeichnet, dass** die beiden sphärischen Oberflächen (28, 32) konzentrisch zueinander angeordnet sind und insbesondere denselben Mittelpunkt (34) haben.

3. Werkstückaufnahme nach Anspruch 2, **dadurch gekennzeichnet, dass** eine Bearbeitungs-, insbesondere Schweißebene (36) durch den gemeinsamen Mittelpunkt (34) verläuft.

4. Werkstückaufnahme nach einem der Ansprüche 1-3, **dadurch gekennzeichnet, dass** die Kugeln (22) von einem Lagerkäfig (24) gehalten sind.

5. Werkstückaufnahme nach einem der Ansprüche 1 - 4, **dadurch gekennzeichnet, dass** die Kugeln (22) äquidistant angeordnet sind.

6. Werkstückaufnahme nach Anspruch 4, **dadurch gekennzeichnet, dass** die Kugeln (22) durch den Lagerkäfig (24) äquidistant angeordnet sind.

7. Werkstückaufnahme nach einem der Ansprüche 1- 6, **dadurch gekennzeichnet, dass** das Fixierelement (38) ein Spannelement (44, 46, 48) aufweist, um zum Fixieren das Aufnahmeelement (10) gegenüber dem Basiselement (16) zu verspannen.

8. Werkstückaufnahme nach einem der Ansprüche 1 - 7, **gekennzeichnet durch** ein Halteelement zum Halten des Werkstückträgers am Aufnahmeelement (10).

9. Werkstückaufnahmeelement nach einem der Ansprüche 2 - 8, **gekennzeichnet durch** ein Justageelement zur Justage des Werkstücks derart, dass die Bearbeitungs-, insbesondere Schweißebene (36) durch den Mittelpunkt (34) der beiden sphärischen Oberflächen (28, 32) verläuft.

10. Werkstückaufnahme nach Anspruch 9, **dadurch gekennzeichnet, dass** durch das Justageelement ein Verschieben des Werkstücks ermöglicht ist.

11. Schweißeinrichtung mit
einer Ultraschall-Schweißvorrichtung,
einer Werkstückaufnahme nach einem der Ansprüche 1 - 10 und
einer Schließvorrichtung zum Bewegen der Schweißvorrichtung relativ zu einem in der Werkstückaufnahme (10) angeordneten Werkstück.

## Claims

1. Workpiece receptacle comprising
a receiving element (10) for receiving the workpiece,
a base element (16) movably receiving the receiving element (10),
a bearing means (20) allowing for a movement between the receiving element (10) and the base element (16),
a bearing cup (26) connected with the receiving element (10), and
a bearing cup (30) connected with the base element (16),
wherein both bearing cups (26, 30) have a spherical surface (28, 32),
wherein balls (22) are arranged between the two bearing cups (26, 30),
**characterized by**
a fixing element (38) for the fixation of the receiving element (10) with respect to the base element (16) in different orientations.

2. Workpiece receptacle of claim 1, **characterized in that** the two spherical surfaces (28, 32) are arranged concentrically with regard to each other and in particular have the same centre (34).

3. Workpiece receptacle of claim 2, **characterized in that** a processing plane, in particular a welding plane (36) passes through the common centre (34).

4. Workpiece receptacle of one of claims 1-3, **characterized in that** the balls (22) are retained by a bearing cage (24).

5. Workpiece receptacle of one of claims 1-4, **characterized in that** the balls (22) are arranged equidistantly.

6. Workpiece receptacle of claim 4, **characterized in that** the balls (22) are arranged equidistantly by the bearing cage (24).

7. Workpiece receptacle of one of claims 1-6, **characterized in that** the fixing element (38) has a tensioning element (44, 46, 48) for tensioning the receiving element (10) with respect to the base element (16) so as to fix the former.

8. Workpiece receptacle of one of claims 1-7, **characterized by** a holding element for holding the workpiece support on the receiving element (10).

9. Workpiece receptacle of one of claims 2-8, **characterized by** an adjustment element for adjusting the workpiece such that the processing plane, in particular the welding plane (36) passes through the centre (34) of the two spherical surfaces (28, 32).

10. Workpiece receptacle of claim 9, **characterized in that** the adjustment element allows for a displacement of the workpiece.

11. Welding apparatus comprising
an ultrasonic welding device,
a workpiece receptacle of one of claims 1-10, and
a closing device for moving the welding device relative to a workpiece arranged in the workpiece receptacle (10).

## Revendications

1. Porte-pièce, comprenant
un élément de porte-pièce (10) permettant d'accueillir la pièce,
un élément de base (16) accueillant de manière mobile l'élément de porte-pièce (10),
un dispositif formant palier (20) permettant un déplacement entre l'élément de porte-pièce (10) et l'élément de base (16),
un coussinet de palier (26) relié à l'élément de porte-pièce (10) et un coussinet de palier (30) relié à l'élément de base (16),
les deux coussinets de palier (26, 30) présentant une surface sphérique (28, 32),
des billes (22) étant agencées entre les deux coussinets de palier (26, 30),
**caractérisé par**
un élément d'immobilisation (38) permettant d'immobiliser l'élément de porte-pièce (10) par rapport à l'élément de base (16) dans différentes positions.

2. Porte-pièce selon la revendication 1, **caractérisé en ce que** les deux surfaces sphériques (28, 32) sont agencées de manière concentrique l'une par rapport à l'autre et partagent en particulier le même centre (34).

3. Porte-pièce selon la revendication 2, **caractérisé en ce qu'**un plan d'usinage, en particulier un plan de soudage (36), passe par le centre (34) commun.

4. Porte-pièce selon l'une quelconque des revendications 1 à 3, **caractérisé en ce que** les billes (22) sont retenues par une cage de roulement (24).

5. Porte-pièce selon l'une quelconque des revendications 1 à 4, **caractérisé en ce que** les billes (22) sont agencées de manière équidistante.

6. Porte-pièce selon la revendication 4, **caractérisé en ce que** les billes (22) sont agencées de manière équidistante grâce à la cage de roulement (24).

7. Porte-pièce selon l'une quelconque des revendications 1 à 6, **caractérisé en ce que** l'élément d'immobilisation (38) présente un élément de serrage (44, 46, 48) afin de contraindre l'élément de porte-pièce (10) par rapport à l'élément de base (16) en vue de l'immobilisation.

8. Porte-pièce selon l'une quelconque des revendications 1 à 7, **caractérisé par** un élément de retenue permettant de retenir le porte-pièce sur l'élément de porte-pièce (10).

9. Elément de porte-pièce selon l'une quelconque des revendications 2 à 8, **caractérisé par** un élément d'ajustement permettant d'ajuster la pièce de telle manière que le plan d'usinage, en particulier le plan de soudage (36), passe par le centre (34) des deux surfaces sphériques (28, 32).

10. Porte-pièce selon la revendication 9, **caractérisé en ce que** l'élément d'ajustement permet un déport de la pièce.

11. Appareil de soudage avec
un dispositif de soudage par ultrasons,
un porte-pièce selon l'une quelconque des revendications 1 à 10 et
un dispositif de fermeture permettant de déplacer le dispositif de soudage par rapport à une pièce agencée dans l'élément de porte-pièce (10).
